# EUROPEAN PATENT APPLICATION

(11) **EP 4 723 314 A1**
(43) Date of publication of application: **08.04.2026**
(21) Application number: 23941966.6
(22) Date of filing: 21.06.2023
(51) Int. Cl.: H01M 50/107, H01M 50/119

(54) **BATTERY CELL, BATTERY, ELECTRIC DEVICE AND ENERGY STORAGE DEVICE**

(71) Applicant: Contemporary Amperex Technology Co., Limited, Ningde, Fujian 352100 (CN)
(72) Inventor: JIN, Haizu, Ningde, Fujian 352100 (CN); LIU, Heyang, Ningde, Fujian 352100 (CN); LIU, Jiang, Ningde, Fujian 352100 (CN); YANG, Limei, Ningde, Fujian 352100 (CN); YANG, Rui, Ningde, Fujian 352100 (CN)
(74) Representative: Gong, Jinping
(86) International application number: PCT/CN2023/101946
(87) International publication number: WO 2024/259694

(57) **Abstract**

Embodiments of this application provide a battery cell, a battery, an electric apparatus, and an energy storage apparatus. The battery cell includes a housing and an electrode assembly, where the electrode assembly is accommodated within the housing, the housing is cylindrical, a height of the housing is H₁, and a radius of the housing is R₁. The housing includes a first end wall, a second end wall, and a side wall, where the first end wall and the second end wall are oppositely disposed along a height direction of the housing, and the side wall connects the first end wall and the second end wall. A sum of thicknesses of the first end wall and the second end wall is a, and a thickness of the side wall is b, satisfying: (R₁-b)²*(H₁-a)/(R₁²*H₁)≥96%. Thus, the volumetric energy density of the battery cell is increased under a same chemical material system.

## Description

### TECHNICAL FIELD

This application relates to the field of battery technology, and specifically relates to a battery cell, a battery, an electric apparatus, and an energy storage apparatus.

### BACKGROUND

With the development of new energy technology, batteries are increasingly widely used, for example, in mobile phones, notebook computers, electric scooters, electric vehicles, energy storage apparatuses, electric airplanes, electric ships, electric toy cars, electric toy ships, electric toy airplanes, and electric tools.

In the development of battery technology, how to increase the volumetric energy density of a battery cell is an urgent problem to be solved in the field of battery technology.

### SUMMARY

Embodiments of this application provide a battery cell, a battery, an electric apparatus, and an energy storage apparatus, which can effectively increase the volumetric energy density of the battery cell.

According to a first aspect, an embodiment of this application provides a battery cell including a housing and an electrode assembly, where the electrode assembly is accommodated within the housing, the housing is cylindrical, a height of the housing is H₁, and a radius of the housing is R₁. The housing includes a first end wall, a second end wall, and a side wall, where the first end wall and the second end wall are oppositely disposed along a height direction of the housing, the side wall connects the first end wall and the second end wall, a sum of thicknesses of the first end wall and the second end wall is a, and a thickness of the side wall is b, satisfying: (R₁-b)²*(H₁-ₐ)/(R₁²*H₁)≥96%.

In the above technical solution, setting a ratio of an internal volume of the housing of the battery cell to a volume of the housing to 96% or more increases an internal space of the housing, allowing the interior of the housing to accommodate a larger electrode assembly and more electrolyte, thereby increasing the volumetric energy density of the battery cell under the same chemical material system.

In some embodiments, (R₁-b)/R₁≥99%, 100 mm≤R₁≤400 mm, and 0.2 mm≤b≤2 mm. This can increase a dimension proportion of the internal space of the housing in a radial direction of the housing, further increasing the volumetric energy density of the battery cell.

In some embodiments, (H₁-a)/H₁≥96%, 100 mm≤H₁≤400 mm, and 2 mm≤a≤7 mm. This can increase the dimension proportion of the internal space of the housing in the height direction of the housing, further increasing the volumetric energy density of the battery cell.

In some embodiments, the housing includes a housing body and two end covers, where the housing body has two oppositely disposed openings, and the two end covers respectively cover the corresponding openings. The housing body serves as the side wall, and the two end covers serve as the first end wall and the second end wall, respectively.

In some embodiments, the battery cell further includes a first insulating member and a second insulating member, where the first insulating member is disposed between the first end wall and the electrode assembly and abuts against the first end wall, and the second insulating member is disposed between the second end wall and the electrode assembly and abuts against the second end wall. A maximum dimension of the first insulating member in the height direction is d₁, and a maximum dimension of the second insulating member in the height direction is d₂, satisfying: (H₁-a-d₁-d₂)/H₁≥90%, 2 mm≤d₁≤6 mm, and 2 mm≤d₂≤6 mm. This increases the space left for the electrode assembly inside the housing in the height direction, allowing a taller electrode assembly to be placed, thereby further increasing the volumetric energy density of the battery cell.

In some embodiments, the housing includes a housing body and an end cover, where the housing body has an opening, and the end cover covers the opening. The housing body includes the second end wall and the side wall that are integrally formed, and the end cover serves as the first end wall.

In some embodiments, the battery cell further includes a third insulating member, where the third insulating member is disposed between the first end wall and the electrode assembly and abuts against the first end wall. Alternatively, the third insulating member is disposed between the second end wall and the electrode assembly and abuts against the second end wall. A maximum dimension of the third insulating member in the height direction is d₃, satisfying: (H₁-a-d₃)/H₁≥92%, and 2 mm≤d₃≤6 mm. This increases the space left for the electrode assembly inside the housing in the height direction, allowing a taller electrode assembly to be placed, thereby further increasing the volumetric energy density of the battery cell.

In some embodiments, 0.001 m³≤*π**R₁²*H₁≤0.015 m³. Thus, on one hand, when the ratio of the internal volume to the volume of the housing is 96% or more, a wall thickness of the housing is not excessively small, thereby meeting requirements for structural strength and rigidity of the housing; on the other hand, a capacity and current of the battery cell can be controlled to be within an appropriate range, reducing heat generation of the battery cell, thereby reducing the risk of damage to components in a circuit.

In some embodiments, the electrode assembly is a wound structure. The electrode assembly is cylindrical. A height of the electrode assembly is H₂, and a radius of the electrode assembly is R₂, satisfying: (R₂²*H₂)/(R₁²*H₁)≥85%. This allows the electrode assembly to fully utilize the internal space of the housing, avoiding a situation where the internal volume of the housing is large but the volume of the electrode assembly is small, thereby increasing the volumetric energy density of the battery cell and reducing movement of the electrode assembly within the housing.

In some embodiments, R₂/(R₁-b)≥97.5%, and H₂/(H₁-a)≥92.5%.

In some embodiments, materials of the first end wall, the second end wall, and the side wall all include an aluminum alloy, where the aluminum alloy includes components with the following mass percentages: aluminum296.7%, 0.05%≤copper≤0.2%, iron≤0.7%, manganese≤1.5%, silicon≤0.6%, zinc≤0.1%, each other individual element component≤0.05%, and total other element components≤0.15%. Thus, an aluminum alloy with higher strength can be achieved, and using such aluminum alloy as the material of the housing can significantly enhance the ability of the housing to resist impact, improving the reliability of the battery cell.

In some embodiments, the materials of the first end wall, the second end wall, and the side wall all include an iron alloy, where the iron alloy includes components with the following mass percentages: iron≥98%, and 0.15%≤carbon≤2%. The iron alloy further contains manganese, silicon, sulfur, phosphorus, and the like, with each individual element component≤0.05% and total components≤0.2%. Thus, an iron alloy with higher strength can be achieved, and using such iron alloy as the material of the housing can significantly enhance the ability of the housing to resist impact, improving the reliability of the battery cell.

In some embodiments, the housing includes a housing body and an end cover, where the housing body has an opening, the end cover covers the opening, and the end cover is connected to the housing body through welding or crimping. The housing body includes the second end wall and the side wall that are integrally formed, and the end cover serves as the first end wall. The battery cell further includes a positive electrode terminal, where the positive electrode terminal is insulatively disposed on the second end wall, the electrode assembly includes a positive tab and a negative tab, the positive tab is electrically connected to the positive electrode terminal, and the negative tab is electrically connected to the second end wall.

In some embodiments, the housing includes a housing body and an end cover, where the housing body has an opening, the end cover covers the opening, and the end cover is connected to the housing body through welding or crimping. The housing body includes the second end wall and the side wall that are integrally formed, and the end cover serves as the first end wall. The battery cell further includes a positive electrode terminal, where the positive electrode terminal is insulatively disposed on the first end wall, the electrode assembly includes a positive tab and a negative tab, the positive tab is electrically connected to the positive electrode terminal, and the negative tab is electrically connected to the first end wall.

In some embodiments, a maximum thickness of the first end wall is a₁, and a maximum thickness of the second end wall is a₂, satisfying: a₁≥a₂ and a₁≥b.

In some embodiments, 1 mm≤a₁≤2 mm, 0.5 mm≤a₂≤1.5 mm, and 0.2 mm≤b≤0.8 mm.

In some embodiments, the housing includes a housing body and two end covers, where the housing body has two oppositely disposed openings, and the two end covers respectively cover the corresponding openings. The housing body serves as the side wall, the two end covers serve as the first end wall and the second end wall, respectively, and the end covers are connected to the housing body through welding or crimping. The battery cell further includes a positive electrode terminal and a negative electrode terminal, where the positive electrode terminal is disposed on the first end wall, the negative electrode terminal is disposed on the second end wall, the electrode assembly includes a positive tab and a negative tab, the positive tab is electrically connected to the positive electrode terminal, and the negative tab is electrically connected to the negative electrode terminal.

In some embodiments, a maximum thickness of the first end wall is a₁, and a maximum thickness of the second end wall is a₂, satisfying: a₁=a₂ and a₁≥b.

In some embodiments, 1 mm≤a₁≤2 mm, and 0.2 mm≤b≤1 mm.

In some embodiments, 0.3≤R₁/H₁≤4, 100 mm≤R₁≤400 mm, and 100 mm≤H₁≤400 mm.

In some embodiments, a positive electrode material of the battery cell includes a lithium-containing phosphate, and a capacity of the battery cell is C, satisfying: C≥350 Ah, and C/[π*(R₁-b)²*(H₁-a)]≥120 Ah/L.

In some embodiments, a positive electrode material of the battery cell includes a lithium transition metal oxide, and a capacity of the battery cell is C, satisfying: C2650Ah, and C/[π*(R₁-b)²*(H₁-a)]≥193 Ah/L.

In some embodiments, the battery cell is a sodium-ion battery, and a capacity of the battery cell is C, satisfying: C≥260 Ah, and C/[π*(R₁-b)²*(H₁-a)]≥88 Ah/L.

According to a second aspect, an embodiment of this application provides a battery including a battery box and the battery cell provided in any embodiment according to the first aspect, where the battery cell is accommodated within the battery box.

According to a third aspect, an embodiment of this application provides an electric apparatus including the battery provided in any embodiment according to the second aspect.

According to a fourth aspect, an embodiment of this application provides an energy storage apparatus including an energy storage box and a plurality of battery cells provided in any embodiment according to the first aspect, where the energy storage box includes a battery compartment, and the plurality of battery cells are accommodated within the battery compartment.

In some embodiments, the battery cell includes an electrode terminal, where the electrode terminal is disposed on the housing. A sum of volumes of the housings of the plurality of battery cells is V₁, and a volume of the battery compartment is V₂, satisfying: 0.5≤V₁/V₂≤0.95. This can increase the space utilization rate of the energy storage apparatus, and allow more battery cells to be arranged within the battery compartment of the energy storage box, that is, more energy-providing structures are arranged per unit space, increasing the energy density and thus increasing the capacity without expanding occupied space.

### DESCRIPTION OF DRAWINGS

To more clearly illustrate the technical solutions of the embodiments of this application, the accompanying drawings required for use in the embodiments are briefly introduced below. It should be understood that the following accompanying drawings only show some embodiments of this application and should not be regarded as limiting the scope. For persons of ordinary skill in the art, other related accompanying drawings can be obtained based on these accompanying drawings without creative effort.
FIG. 1 is a schematic structural diagram of a vehicle according to some embodiments of this application.
FIG. 2 is an exploded view of a battery according to some embodiments of this application.
FIG. 3 is a schematic structural diagram of an energy storage apparatus according to some embodiments of this application.
FIG. 4 is a schematic diagram of an internal structure of the energy storage apparatus shown in FIG. 3.
FIG. 5 is a schematic structural diagram of a battery cell according to some embodiments of this application.
FIG. 6 is an exploded view of the battery cell shown in FIG. 5.
FIG. 7 is a cross-sectional exploded view of the battery cell shown in FIG. 5.
FIG. 8 is a schematic structural diagram of a battery cell according to some other embodiments of this application.
FIG. 9 is an exploded view of the battery cell shown in FIG. 8.
FIG. 10 is a cross-sectional exploded view of the battery cell shown in FIG. 8.
FIG. 11 is an exploded view of a battery cell according to still some embodiments of this application.
FIG. 12 is an exploded view of the battery cell shown in FIG. 11.
FIG. 13 is a cross-sectional view of the battery cell shown in FIG. 11.
FIG. 14 is a cross-sectional exploded view of the battery cell shown in FIG. 11.

Reference signs: 1. housing; 11. housing body; 12. end cover; 101. first end wall; 102. second end wall; 103. side wall; 2. electrode assembly; 21. main body; 22. positive tab; 23. negative tab; 31. positive electrode terminal; 32. negative electrode terminal; 41. first insulating member; 42. second insulating member; 43. third insulating member; 44. fourth insulating member; 51. first current collecting member; 52. second current collecting member; 10. battery cell; 20. battery box; 201. first portion; 202. second portion; 100. battery; 200. controller; 300. motor; 400. energy storage box; 401. battery compartment; 402. electrical compartment; 403. upright post; 404. battery bracket; 1000. vehicle; 2000. energy storage apparatus; and X. height direction.

### DESCRIPTION OF EMBODIMENTS

To make the objectives, technical solutions, and advantages of the embodiments of this application clearer, the technical solutions in the embodiments of this application are clearly described below with reference to the accompanying drawings in the embodiments of this application. Obviously, the described embodiments are some embodiments rather than all embodiments of this application. Based on the embodiments in this application, all other embodiments obtained by persons of ordinary skill in the art without creative effort fall within the protection scope of this application.

Unless otherwise defined, all technical and scientific terms used in this application have the same meanings as commonly understood by persons skilled in the technical field of this application. Terms used in the specification of this application are only for the purpose of describing specific embodiments and are not intended to limit this application. The terms "including", "comprise", and any variations thereof in the specification, claims, and the above description of the accompanying drawings of this application are intended to cover non-exclusive inclusion. In the specification, the claims, or accompanying drawings of this application, the terms "first", "second", and the like are intended to distinguish between different objects rather than to describe a particular order or a primary-secondary relationship.

Reference to "embodiment" in this application means that a specific feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments.

In the embodiments of this application, the same reference signs denote the same components, and for brevity, detailed descriptions of the same components are omitted in different embodiments. The term "a plurality of" appearing in this application refers to two or more (including two).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application.

The battery mentioned in the embodiments of this application refers to a single physical module including one or more battery cells to provide higher voltage and capacity. For example, the battery mentioned in this application may include a battery module, a battery pack, or the like. The battery generally includes a battery box for encapsulating one or more battery cells. The battery box can prevent liquids or other foreign objects from affecting the charging or discharging of the battery cells.

The battery cell includes a housing, an electrode assembly, and an electrolyte, where the housing is configured to accommodate the electrode assembly and the electrolyte. The electrode assembly includes a positive electrode plate, a negative electrode plate, and a separator. The battery cell operates primarily by the movement of metal ions between the positive electrode plate and the negative electrode plate. The positive electrode plate includes a positive electrode current collector and a positive electrode active material layer, where the positive electrode active material layer is applied on a surface of the positive electrode current collector, and a portion of the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganese oxide, or the like. The negative electrode plate includes a negative electrode current collector and a negative electrode active material layer, where the negative electrode active material layer is applied on a surface of the negative electrode current collector, and a portion of the negative electrode current collector not coated with the negative electrode active material layer protrudes from the negative electrode current collector coated with the negative electrode active material layer, and the negative electrode current collector not coated with the negative electrode active material layer serves as a negative tab. The material of the negative electrode current collector may be copper, and the negative electrode active material may be carbon, silicon, or the like. The separator may be made of PP (polypropylene, polypropylene), PE (polyethylene, polyethylene), or the like. Additionally, the electrode assembly may be a wound structure or a stacked structure, and the embodiments of this application are not limited thereto.

The battery cell may further include an electrode terminal, where the electrode terminal is disposed on the housing and is configured to be electrically connected to a tab of the electrode assembly to output electrical energy of the battery cell. The electrode terminal and the tab may be directly connected, for example, the electrode terminal is directly welded to the tab. The electrode terminal and the tab may alternatively be indirectly connected, for example, the electrode terminal is indirectly connected to the tab via a current collecting member. The current collecting member may be a metal conductor, such as copper, iron, aluminum, steel, or an aluminum alloy.

For the development of battery technology, a plurality of design factors should be simultaneously considered, such as safety, cycle life, discharge capacity, charge/discharge rate, and other performance parameters. Additionally, volumetric energy density is also an important parameter for evaluating battery performance.

In a battery cell, to improve safety and reduce the risk of housing rupture caused by an external impact or high internal pressure received by the battery cell, the housing is typically designed to be thick. However, a thick housing reduces the internal space of the housing. Moreover, to reduce the likelihood of an internal short circuit in the battery cell, some insulating members are usually provided inside the housing. These insulating members inevitably occupy a portion of the space, leaving very limited space for the electrode assembly, thus resulting in a low volumetric energy density of the battery cell.

In view of this, an embodiment of this application provides a cylindrical battery cell. In this cylindrical battery cell, a ratio of an internal volume of the housing to a volume of the housing is 96% or more, increasing the internal space of the housing to accommodate a larger electrode assembly and more electrolyte, thereby increasing the volumetric energy density of the battery cell under the same chemical material system.

The battery cell described in this embodiment of this application is applicable to a battery and an electric apparatus using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

The following embodiments, for ease of explanation, use an example in which the electric apparatus is a vehicle.

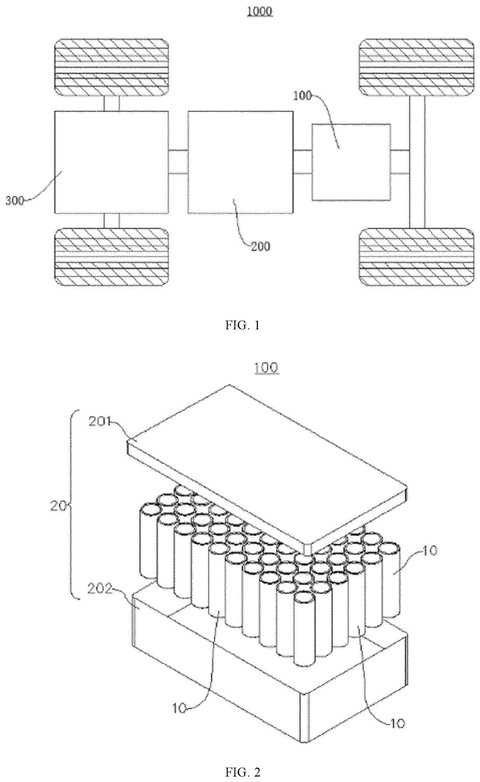

Reference is made to FIG. 1, where FIG. 1 is a schematic structural diagram of a vehicle 1000 according to some embodiments of this application. A battery 100 is disposed inside the vehicle 1000, and the battery 100 may be disposed at the bottom, front, or rear of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, for the operational power demands of the vehicle 1000 during start, navigation, and driving.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

Reference is made to FIG. 2, where FIG. 2 is an exploded view of a battery 100 according to some embodiments of this application. The battery 100 includes a battery cell 10 and a battery box 20, where the battery cell 10 is accommodated within the battery box 20.

The battery box 20 is a component that accommodates the battery cell 10. The battery box 20 provides an accommodation space for the battery cell 10, and the battery box 20 may adopt various structures. In some embodiments, the battery box 20 may include a first portion 201 and a second portion 202, where the first portion 201 and the second portion 202 cover each other to define an accommodation space for accommodating the battery cell 10. The first portion 201 and the second portion 202 may have various shapes, such as a cuboid or a cylinder. The first portion 201 may be a hollow structure with one side open, and the second portion 202 may also be a hollow structure with one side open, where the open side of the second portion 202 covers the open side of the first portion 201 to form the battery box 20 with an accommodation space. Alternatively, the first portion 201 may be a hollow structure with one side open, and the second portion 202 may be a plate-like structure, where the second portion 202 covers the open side of the first portion 201 to form the battery box 20 with an accommodation space. The first portion 201 and the second portion 202 may be sealed by a sealing element, and the sealing element may be a sealing ring, a sealing adhesive, or the like.

There may be one or more battery cells 10 in the battery 100. If there are a plurality of battery cells 10, the plurality of battery cells 10 may be connected in series, in parallel, or in series-parallel, where being connected in series-parallel refers to a combination of both series connection and parallel connection between the plurality of battery cells 10. The plurality of battery cells 10 may first be connected in series, in parallel, or in series-parallel to form a battery module, and then a plurality of battery modules may be connected in series, in parallel, or in series-parallel to form an entirety accommodated within the battery box 20. Alternatively, all the battery cells 10 may be directly connected in series, in parallel, or in series-parallel, and then the entirety formed by all the battery cells 10 is accommodated within the battery box 20.

In some embodiments, the battery 100 may further include a busbar component (not shown in the figure), and the plurality of battery cells 10 may be electrically connected via the busbar component to achieve series, parallel, or series-parallel connection of the plurality of battery cells 10. The busbar component may be a metal conductor, such as copper, iron, aluminum, stainless steel, or an aluminum alloy.

The battery cell described in the embodiments of this application is also applicable to an energy storage apparatus.

The role of energy storage apparatuses in future energy application scenarios is becoming increasingly prominent. On one hand, in renewable energy generation, wind and solar power generation have the characteristics of intermittency and instability, and introducing an energy storage apparatus can effectively suppress fluctuations in power generation, thereby improving power quality. On the other hand, the energy storage apparatus can also realize "peak shave and valley fill", that is, absorbing excess power from the grid during periods of low output power and actively supplying power to the grid during periods of peak output power, thereby significantly reducing the peak power of the grid, enhancing the power demand-side management capabilities, and promoting the application of renewable energy.

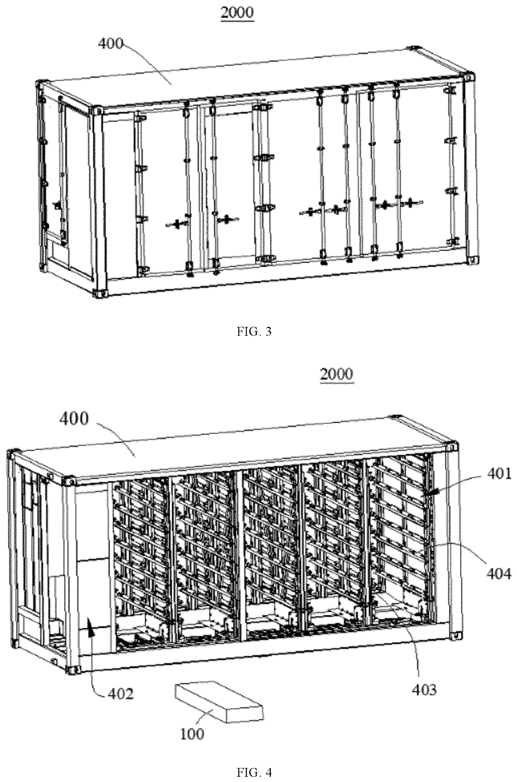

Reference is made to FIG. 3 and FIG. 4, where FIG. 3 is a schematic structural diagram of an energy storage apparatus 2000 according to some embodiments of this application, and FIG. 4 is a schematic diagram of an internal structure of the energy storage apparatus 2000 shown in FIG. 3.

The energy storage apparatus 2000 includes an energy storage box 400, a battery 100, and a control module (not shown in the figure), where an internal space of the energy storage box 400 is divided into a battery compartment 401 and an electrical compartment 402, the battery 100 is placed in the battery compartment 401, and the control module is placed in the electrical compartment 402. An upright post 403 and a battery bracket 404 are disposed within the battery compartment 401, where the upright post 403 is typically disposed along a height direction of the energy storage box 400, the battery bracket 404 is fixed to the upright post 403, and the battery 100 is placed on the battery bracket 404 to facilitate the arrangement of a plurality of batteries 100 within the battery compartment 401. Certainly, in other embodiments, the battery cells 10 may be directly placed in the battery compartment 401, so that there is no need to first place the battery cells 10 in the battery box 20 and then place the battery box 20 in the battery compartment 401. Accordingly, there is no need to provide the upright post 403 and the battery bracket 404 in the battery compartment 401, increasing the energy density of the energy storage apparatus 2000.

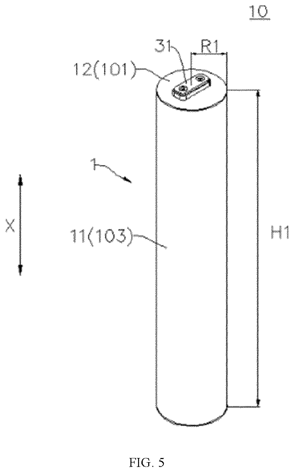

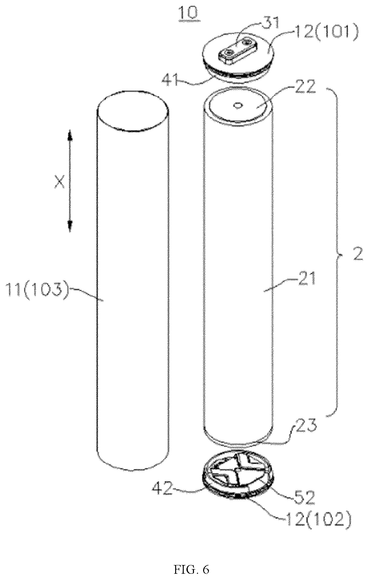

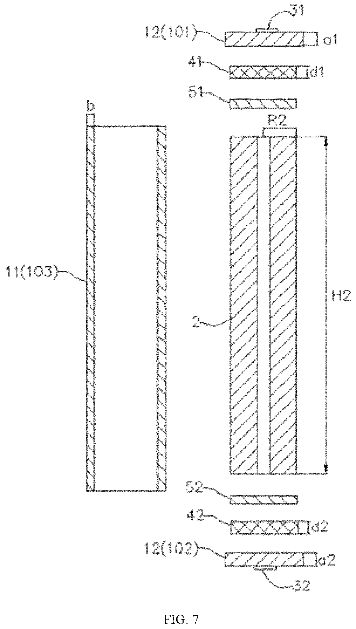

Reference is made to FIG. 5 to FIG. 7, where FIG. 5 is a schematic structural diagram of a battery cell 10 according to some embodiments of this application, FIG. 6 is an exploded view of the battery cell 10 shown in FIG. 5, and FIG. 7 is a cross-sectional exploded view of the battery cell shown in FIG. 5.

The battery cell 10 may include a housing 1 and an electrode assembly 2.

The housing 1 is a component configured to accommodate the electrode assembly 2. The housing 1 is cylindrical. A height of the housing 1 is H₁, and a radius of the housing 1 is R₁. A height direction X of the housing 1 refers to an axial direction of the housing 1.

There may be one or a plurality of electrode assemblies 2. When there are a plurality of electrode assemblies 2, the plurality of electrode assemblies 2 may be arranged along the height direction X of the housing 1.

The electrode assembly 2 is a component in the battery cell 10 where electrochemical reaction take place. The electrode assembly 2 may include a positive electrode plate, a negative electrode plate, and a separator.

Reference is made to FIG. 6 and FIG. 7, where the housing 1 includes a first end wall 101 and a second end wall 102 oppositely disposed along the height direction X, and a side wall 103 connecting the first end wall 101 and the second end wall 102. The side wall 103 surrounds the first end wall 101 and also surrounds the second end wall 102. The side wall 103, the first end wall 101, and the second end wall 102 jointly enclose a space for accommodating the electrode assembly 2.

A sum of thicknesses of the first end wall 101 and the second end wall 102 is a, and a thickness of the side wall 103 is b, satisfying: (R₁-b)²*(H₁-a)/(R₁²*H₁)≥96%.

In this embodiment, the thicknesses of the first end wall 101 and the second end wall 102 may be equal or not equal.

Since both a and b are greater than 0, it can be understood that 96%≤(R₁-b)²*(H₁-a)/(R₁²*H₁)<100%.

(R₁-b)²*(H₁-a)/(R₁²*H₁) may be any value between 96% and 100%, for example, 96%, 96.5%, 97%, 97.5%, 98%, 98.5%, 99%, 99.5%, or the like.

Herein, π*(R₁-b)²*(H₁-a) may be understood as an internal volume of the housing 1, that is, a volume of a space enclosed by an inner surface of the housing 1; π*R₁²*H₁ is a volume of the housing 1, approximately equal to a volume of the battery cell 10; and π is pi.

If an outer surface of the first end wall 101 and an outer surface of the second end wall 102 are both planes, H₁ is measured based on the outer surface of the first end wall 101 and the outer surface of the second end wall 102. For example, if the outer surface of the first end wall 101 and the outer surface of the second end wall 102 are both planes, H₁ is a distance along the height direction X between the outer surface of the first end wall 101 and the outer surface of the second end wall 102.

If the outer surface of the first end wall 101 or the outer surface of the second end wall 102 has a protrusion or a recess, H₁ is measured based on a planar region of the outer surface (that is, a region other than the protrusion or recess). For example, if the outer surface of the first end wall 101 is a plane and the outer surface of the second end wall 102 has a first protrusion, H₁ is a distance along the height direction X between a planar region of the outer surface of the second end wall 102 other than the first protrusion and the outer surface of the first end wall 101. If the outer surface of the second end wall 102 has a first protrusion and the outer surface of the first end wall 101 has a second protrusion, H₁ is a distance along the height direction X of the battery cell 10 between a planar region of the outer surface of the first end wall 101 other than the second protrusion and a planar region of the outer surface of the second end wall 102 other than the first protrusion.

If the first end wall 101, the second end wall 102, and the side wall 103 are all walls with uniform thickness, a distance between an outer surface and an inner surface of each wall can be measured at any position of the wall to obtain the thickness of the wall.

If one of the first end wall 101, the second end wall 102, and the side wall 103 is a wall with non-uniform thickness, a distance between an outer surface and an inner surface of each wall is measured at a thickest position of the wall to obtain the thickness of the wall. That is, if the thickness of a wall is non-uniform, a maximum thickness of the wall is used to calculate a or b.

According to the embodiments of this application, setting the ratio of the internal volume of the housing 1 of the battery cell 10 to the volume of the housing 1 to 96% or more increases the internal space of the housing 1 to accommodate a larger electrode assembly 2, thereby increasing the volumetric energy density of the battery cell 10 under the same chemical material system.

To ensure that the ratio of the internal volume of the housing 1 to the volume of the housing 1 can be 96% or more, and to make the proportion of the wall thickness of the housing 1 relatively uniform in the height direction X and radial direction, the balance between forces applied to the housing 1 in all directions is improved. In some embodiments, R₁ and b satisfy (R₁-b)/R₁≥99.0%, 100 mm≤R₁≤400 mm, and 0.2 mm≤b≤2 mm.

Setting the ratio of R₁-b to R₁ to 99.0% or more increases a radius of the internal space of the housing 1 while keeping a radius of the housing 1 unchanged, allowing an electrode assembly 2 with a larger radius to be accommodated, thereby increasing the volumetric energy density of the battery cell 10 under the same chemical material system.

(R₁-b)/R₁ may be any value between 99.0% and 100%, for example, 99.0%, 99.1%, 99.2%, 99.3%, 99.4%, 99.5%, 99.6%, 99.7%, 99.8%, 99.9%, or the like.

R₁ may be any value between 100 mm and 400 mm, for example, 100 mm, 120 mm, 140 mm, 160 mm, 180 mm, 200 mm, 250 mm, 300 mm, 350 mm, 400 mm, or the like.

b may be any value between 0.2 mm and 2 mm, for example, 0.2 mm, 0.5 mm, 0.8 mm, 1 mm, 1.2 mm, 1.5 mm, 1.8 mm, or 2 mm.

In some embodiments, H₁ and a satisfy (H₁-a)/H₁≥96%, 100 mm≤H₁≤400 mm, and 2 mm≤a≤7 mm.

Setting the ratio of H₁-a to H₁ to 96% or more increases a height of the internal space of the housing 1 while keeping a height of the battery cell 10 unchanged, allowing a taller electrode assembly 2 to be accommodated, thereby increasing the volumetric energy density of the battery cell 10 under the same chemical material system.

(H₁-a)/H₁ may be any value between 96% and 100%, for example, 96%, 96.5%, 97%, 97.5%, 98%, 98.5%, 99%, 99.5%, or the like.

H₁ may be any value between 100 mm and 400 mm, for example, 100 mm, 120 mm, 140 mm, 160 mm, 180 mm, 200 mm, 250 mm, 300 mm, 350 mm, 400 mm, or the like.

a may be any value between 2 mm and 7 mm, for example, 2 mm, 2.5 mm, 3 mm, 3.5 mm, 4 mm, 4.5 mm, 5 mm, 5.5 mm, 6 mm, 6.5 mm, 7 mm, or the like.

In an example, the housing 1 may include a housing body 11 and an end cover 12.

The housing body 11 may be a hollow structure with one end open and the other end closed. The housing body 11 may alternatively be a hollow structure with two opposite ends open. The opening is configured to allow the electrode assembly 2 to enter an internal space of the housing body 11. The end cover 12 is a component that closes the opening of the housing body 11 to isolate an internal environment of the battery cell 10 from an external environment. The end cover 12 and the housing body 11 jointly define a sealed space for accommodating the electrode assembly 2, electrolyte, and other components. The end cover 12 may be connected to the housing body 11 through welding or crimping to close the opening of the housing body 11. A shape of the end cover 12 may be adapted to a shape of the housing body 11, for example, the housing body 11 is a cylindrical structure, and the end cover 12 is a circular plate-like structure adapted to the housing body 11.

In the battery cell 10, there may be one or two end covers 12.

As shown in FIG. 6, in an embodiment in which the housing body 11 is a hollow structure with both ends open, two end covers 12 may be correspondingly provided, where the two end covers 12 respectively close the two openings of the housing body 11, and the two end covers 12 and the housing body 11 jointly define a sealed space. In this embodiment, the side wall 103 serves as the housing body 11, the first end wall 101 serves as one end cover 12, and the second end wall 102 serves as the other end cover 12.

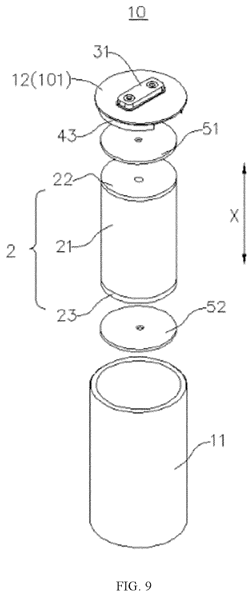

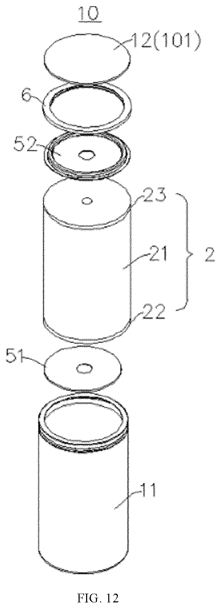

As shown in FIG. 9 and FIG. 12, in embodiments in which the housing body 11 is a hollow structure with one end open, one end cover 12 may be correspondingly provided, where the end cover 12 closes the opening at one end of the housing body 11, and the one end cover 12 and the housing body 11 jointly define a sealed space. In these embodiments, the second end wall 102 and the side wall 103 are integrally formed and serve as the housing body 11, the first end wall 101 and the side wall 103 are separately formed, and the first end wall 101 serves as the end cover 12.

To reduce the likelihood of an internal short circuit in the battery cell 10, an insulating member may be provided inside the housing 1, but the insulating member inevitably occupies a portion of the internal space of the housing 1, thus reducing the space left for the electrode assembly 2.

Reference is made to FIG. 6 and FIG. 7. In some embodiments of this application, the housing 1 includes a housing body 11 and two end covers 12, where the housing body 11 has two openings oppositely disposed along the height direction X, and the two end covers 12 respectively cover the corresponding openings. The housing body 11 serves as the side wall 103, and the two end covers 12 serve as the first end wall 101 and the second end wall 102, respectively. The battery cell 10 further includes a first insulating member 41 and a second insulating member 42, where the first insulating member 41 is disposed between the first end wall 101 and the electrode assembly 2 and abuts against the first end wall 101; and the second insulating member 42 is disposed between the second end wall 102 and the electrode assembly 2 and abuts against the second end wall 102. A maximum dimension of the first insulating member 41 in the height direction X is d₁, and a maximum dimension of the second insulating member 42 in the height direction X is d₂, satisfying: (H₁-a-d₁-d₂)/H₁≥90%, 2 mm≤d₁≤6 mm, and 2 mm≤d₂≤6 mm.

In this embodiment, the first insulating member 41 and the second insulating member 42 may be lower plastic components.

In this embodiment, H₁-a-d₁-d₂ represents: a maximum dimension left for the electrode assembly 2 in the internal space of the housing 1 along the height direction X when the first insulating member 41 abutting against the first end wall 101 is disposed between the first end wall 101 and the electrode assembly 2 and when the second insulating member 42 abutting against the second end wall 102 is disposed between the second end wall 102 and the electrode assembly 2.

Setting the ratio of (H₁-a-d₁-d₂) to H₁ to 90% or more increases the space left for the electrode assembly 2 inside the housing 1 along the height direction X, allowing a taller electrode assembly 2 to be placed, thereby further increasing the volumetric energy density of the battery cell 10.

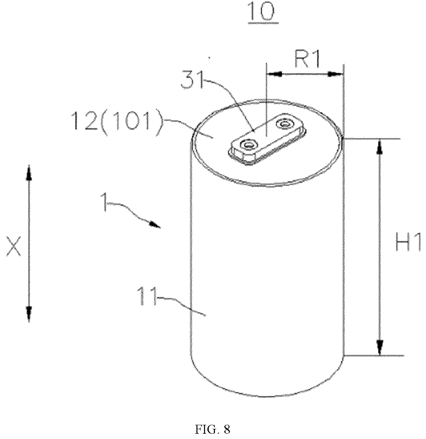

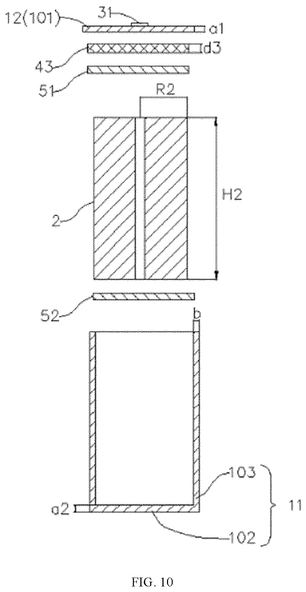

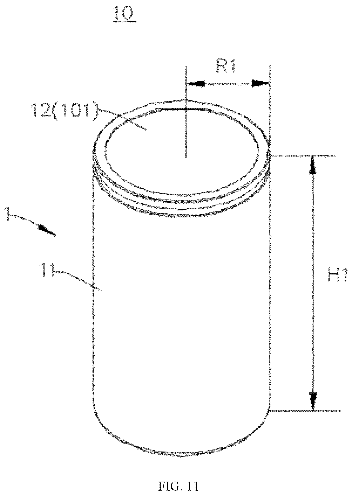

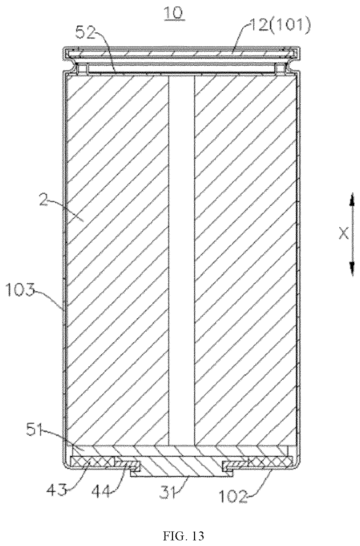

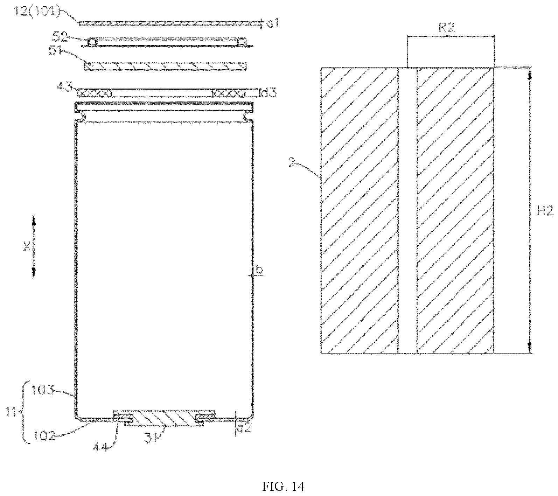

Reference is made to FIG. 8 to FIG. 14, where FIG. 8 is a schematic structural diagram of a battery cell according to some other embodiments of this application, FIG. 9 is an exploded view of the battery cell shown in FIG. 8, FIG. 10 is a cross-sectional exploded view of the battery cell shown in FIG. 8, FIG. 11 is an exploded view of a battery cell according to still some embodiments of this application, FIG. 12 is an exploded view of the battery cell shown in FIG. 11, FIG. 13 is a cross-sectional view of the battery cell shown in FIG. 11, and FIG. 14 is a cross-sectional exploded view of the battery cell shown in FIG. 11.

In some embodiments of this application, the housing 1 includes a housing body 11 and an end cover 12, where the housing body 11 has an opening, and the end cover 12 covers the opening. The housing body 11 includes the second end wall 102 and the side wall 103 that are integrally formed, and the end cover 12 serves as the first end wall 101. The battery cell 10 further includes a third insulating member 43. In the embodiments shown in FIG. 9 and FIG. 10, the third insulating member 43 is disposed between the first end wall 101 and the electrode assembly 2 and abuts against the first end wall 101. In the embodiments shown in FIG. 13 and FIG. 14, the third insulating member 43 is disposed between the second end wall 102 and the electrode assembly 2 and abuts against the second end wall 102, and a maximum dimension of the third insulating member 43 in the height direction X is d₃, satisfying: (H₁-a-d₃)/H₁≥92%, and 2 mm≤d₃≤6 mm.

The third insulating member 43 may be a lower plastic component.

In this embodiment, H₁-a-d₃ represents: a maximum dimension left for the electrode assembly 2 in the internal space of the housing 1 along the height direction X when the third insulating member 43 abutting against the first end wall 101 is disposed between the first end wall 101 and the electrode assembly 2 or the third insulating member 43 abutting against the second end wall 102 is disposed between the second end wall 102 and the electrode assembly 2.

Setting the ratio of (H₁-a-d₃) to H₁ to 92% or more increases the space left for the electrode assembly 2 inside the housing 1, allowing a taller electrode assembly 2 to be placed, thereby further increasing the volumetric energy density of the battery cell 10.

In some embodiments of this application, R₁ and H₁ satisfy: 0.001 m³≤π*R₁²*H₁≤0.015 m³, that is, the volume of the housing 1 is between 0.001 m³ and 0.015 m³.

When π*R₁²*H₁<0.001 m³, to ensure that the ratio of the internal volume of the housing 1 to the volume of the housing 1 is 96% or more, the wall thickness of the housing 1 needs to be designed to be smaller, resulting in a smaller load-bearing capacity, insufficient structural strength and rigidity of the housing 1, and susceptibility to deformation or damage, which is detrimental to the safety of the battery cell 10.

When π*R₁²*H₁>0.015 m³, the volume of the battery cell 10 is larger, the capacity is larger, and the current during discharge of the battery cell 10 is larger, causing more heat generation in an overcurrent component in the circuit, thus easily leading to damage to the overcurrent component.

In these embodiments, the volume of the housing 1 is set to be between 0.001 m³ and 0.015 m³. On one hand, when the ratio of the internal volume to the volume of the housing 1 is 96% or more, the wall thickness of the housing 1 is not excessively small, thereby meeting requirements for the structural strength and rigidity of the housing 1; on the other hand, the capacity and current of the battery cell 10 can be controlled to be within an appropriate range, reducing the risk of damage to the overcurrent component in the circuit.

π*R₁²*H₁ may be any value between 0.001 m³ and 0.015 m³, for example, 0.001 m³, 0.0015 m³, 0.002 m³, 0.003 m³, 0.004 m³, 0.005 m³, 0.006 m³, 0.007 m³, 0.008 m³, 0.009 m³, 0.01 m³, 0.011 m³, 0.012 m³, 0.013 m³, 0.014 m³, 0.015 m³, or the like.

Reference is made to FIG. 7, FIG. 10, and FIG. 14. In some embodiments of this application, the electrode assembly 2 is a wound structure. The electrode assembly 2 is cylindrical. A height of the electrode assembly 2 is H₂, and a radius of the electrode assembly 2 is R₂, satisfying: (R₂²*H₂)/(R₁²*H₁)≥85%.

The electrode assembly 2 is a wound structure formed by winding a positive electrode plate, a separator, and a negative electrode plate.

The positive electrode plate includes a positive electrode current collector and a positive electrode active material layer, where the positive electrode active material layer is applied on a partial region of the positive electrode current collector. The positive electrode active material layer and a region of the positive electrode current collector coated with the positive electrode active material layer form a positive electrode coated region, a region of the positive electrode current collector not coated with the positive electrode active material layer forms a positive tab 22, and the positive tab 22 protrudes from the positive electrode coated region. There may be a plurality of positive tabs 22, where the plurality of positive tabs 22 are spaced apart before the positive electrode plate is wound and are stacked together after the positive electrode plate is wound. There may alternatively be one positive tab 22, where a length of the positive tab 22 is equal to a length of the positive electrode plate.

The negative electrode plate includes a negative electrode current collector and a negative electrode active material layer, where the negative electrode active material layer is applied on a partial region of the negative electrode current collector. The negative electrode active material layer and a region of the negative electrode current collector coated with the negative electrode active material layer form a negative electrode coated region, a region of the negative electrode current collector not coated with the negative electrode active material layer forms a negative tab 23, and the negative tab 23 protrudes from the negative electrode coated region. There may be a plurality of negative tabs 23, where the plurality of negative tabs 23 are spaced apart before the negative electrode plate is wound and are stacked together after the negative electrode plate is wound. There may alternatively be one negative tab 23, where a length of the negative tab 23 is equal to a length of the negative electrode plate.

The positive electrode coated region and the negative electrode coated region are disposed opposite each other. The positive electrode coated region, the negative electrode coated region, and the separator form a main body 21 of the electrode assembly 2. The positive tab 22 and the negative tab 23 protrude from the main body 21.

H₂ is the height of the electrode assembly 2, that is, a distance between two end surfaces of the electrode assembly 2 in the height direction X. If an end surface of the electrode assembly 2 in the height direction X is an uneven surface, the height of the electrode assembly 2 is measured based on the most protruding point on the end surface, that is, H₂ is a maximum dimension of the electrode assembly 2 in the height direction X. If the battery cell 10 includes a plurality of electrode assemblies 2 arranged along the height direction X, H₂ is a maximum dimension of an entirety formed by the plurality of electrode assemblies 2 in the height direction X.

R₂ is a radius of the electrode assembly 2. If a peripheral surface of the electrode assembly 2 is an irregular cylindrical surface, half of a maximum diameter of the cylindrical surface is taken as R₂ during measurement. If the battery cell 10 includes a plurality of electrode assemblies 2, H₂ is a maximum dimension of an entirety formed by the main bodies 21 of the plurality of electrode assemblies 2 in the height direction X. If the battery cell 10 includes a plurality of electrode assemblies 2 arranged along the height direction X, R₂ is half of a maximum diameter of an entirety formed by the plurality of electrode assemblies 2.

In these embodiments, setting (R₂²*H₂)/(R₁²*H₁) to 85% or more allows the electrode assembly 2 to fully utilize the internal space of the housing 1, avoiding a situation where the internal volume of the housing 1 is large but the volume of the electrode assembly 2 is small, thereby increasing the volumetric energy density of the battery cell 10 and reducing movement of the electrode assembly 2 within the housing 1.

(R₂²*H₂)/(R₁²*H₁) may be any value between 85% and 100%, for example, 85%, 86%, 87%, 88%, 89%, 90%, 91%, 92%, 93%, 94%, 95%, 96%, 97%, 98%, 99%, or the like.

To ensure that the ratio of R₂²*H₂ to R₁²*H₁ can be 85% or more, and to match the dimensions of the electrode assembly 2 in all directions with the dimensions of the internal space of the housing 1 in all directions so that the movement of the electrode assembly 2 within the housing 1 is further reduced, in some embodiments, the following is satisfied: R₂/(R₁-b)≥97.5%, and H₂/(H₁-a)≥92.5%.

Setting the ratio of R₂ to R₁-b to 97.5% or more can increase the space utilization rate of the interior of the housing 1 in the radial direction, thereby increasing the volumetric energy density of the battery cell 10 under the same chemical material system. The ratio of R₂ to R₁-b may be any value above 97.5%, for example, 97.5%, 97.6%, 97.8%, 98.0%, 98.2%, 98.4%, 98.6%, 98.8%, 99.0%, 99.2%, 99.4%, 99.6%, 99.8%, or the like.

Setting the ratio of H₂ to H₁-a to 92.5% or more can increase the space utilization rate of the interior of the housing 1 in the height direction X, thereby increasing the volumetric energy density of the battery cell 10 under the same chemical material system. The ratio of H₂ to H₁-a may be any value above 92.5%, for example, 92.5%, 93.0%, 93.5%, 94.0%, 94.5%, 95.0%, 95.5%, 96.0%, 96.5%, 97.0%, 97.5%, 98.0%, 98.5%, or the like.

When 0.001 m³≤π*R₁²*H₁≤0.015 m³ and (R₂²*H₂)/(R₁²*H₁)≥85%, the volume of the battery cell 10 is larger, and the volume of the electrode assembly 2 is also larger. Under the same chemical material system, a larger volume of the electrode assembly 2 indicates a larger mass of the electrode assembly 2. However, when the battery cell 10 experiences a drop or collision, the electrode assembly 2 moves within the housing 1, and a larger mass of the electrode assembly 2 results in a larger impact to the housing 1.

To enable all wall portions of the housing 1 to withstand large impacts, reduce the risk of deformation of the housing 1, and improve the reliability of the battery cell 10, in some embodiments of this application, materials of the first end wall 101, the second end wall 102, and the side wall 103 all include an aluminum alloy, where the aluminum alloy includes components with the following mass percentages: aluminum≥96.7%, 0.05%≤copper≤0.2%, iron≤0.7%, manganese≤1.5%, silicon≤0.6%, zinc≤0.1%, each other individual element component≤0.05%, and total other element components≤0.15%. By controlling the mass percentages of various elements to be within the above ranges, an aluminum alloy with higher strength can be achieved, and using such aluminum alloy as the material of the housing 1 can significantly enhance the ability of the housing 1 to resist impact, improving the reliability of the battery cell 10.

In some other embodiments of this application, the materials of the first end wall 101, the second end wall 102, and the side wall 103 all include an iron alloy, where the iron alloy includes components with the following mass percentages: iron≥98%, and 0.15%≤carbon≤2%; and the iron alloy further contains manganese, silicon, sulfur, phosphorus, and the like, with each individual element component≤0.05% and total components≤0.2%. By controlling the mass percentages of various elements to be within the above ranges, an iron alloy with higher strength can be achieved, and using such iron alloy as the material of the housing 1 can significantly enhance the ability of the housing 1 to resist impact, improving the reliability of the battery cell 10.

Reference is made to FIG. 9 and FIG. 10. In some embodiments of this application, the housing 1 includes a housing body 11 and an end cover 12, where the housing body 11 has an opening, the end cover 12 covers the opening, and the end cover 12 is connected to the housing body 11 through welding or crimping. The second end wall 102 and the side wall 103 are integrally formed and serve as the housing body 11. The first end wall 101 and the side wall 103 are separately formed, and the first end wall 101 serves as the end cover 12. The battery cell 10 further includes a positive electrode terminal 31, where the positive electrode terminal 31 is insulatively disposed on the end cover 12, a positive tab 22 of the electrode assembly 2 is electrically connected to the positive electrode terminal 31, and a negative tab 23 of the electrode assembly 2 is electrically connected to the end cover 12.

In the embodiments shown in FIG. 9 and FIG. 10, the battery cell 10 further includes a first current collecting member 51 and a second current collecting member 52, where the positive tab 22 is electrically connected to the positive electrode terminal 31 via the first current collecting member 51, and the negative tab 23 is electrically connected to the housing body 11 via the second current collecting member 52. Since the housing body 11 and the end cover 12 are electrically connected through welding or crimping, the negative tab 23 is electrically connected to the end cover 12.

In other embodiments, the positive tab 22 may be directly connected to the positive electrode terminal 31, without providing the first current collecting member 51 for adapting connection. The negative tab 23 may be directly connected to the housing body 11, without providing the second current collecting member 52 for adapting connection; and the negative tab 23 may alternatively be electrically connected to the end cover 12 via an additionally provided conductive member (for example, a wire), without using the housing body 11 for adapting connection.

Reference is made to FIG. 12 to FIG. 14. In some embodiments of this application, the housing 1 includes a housing body 11 and an end cover 12, where the housing body 11 has an opening, the end cover 12 covers the opening, and the end cover 12 is connected to the housing body 11 through welding or crimping (connected through crimping in the figure); the second end wall 102 and the side wall 103 are integrally formed and serve as the housing body 11; the first end wall 101 and the side wall 103 are separately formed; and the first end wall 101 serves as the end cover 12. The battery cell 10 further includes a positive electrode terminal 31, where the positive electrode terminal 31 is insulatively disposed on the second end wall 102, a positive tab 22 of the electrode assembly 2 is electrically connected to the positive electrode terminal 31, and a negative tab 23 of the electrode assembly 2 is electrically connected to the second end wall 102.

In the embodiments shown in FIG. 12 to FIG. 14, the battery cell 10 further includes a first current collecting member 51, a second current collecting member 52, and a fourth insulating member 44, where the positive tab 22 is electrically connected to the positive electrode terminal 31 via the first current collecting member 51, the negative tab 23 is electrically connected to the side wall 103 via the second current collecting member 52, and the positive electrode terminal 31 and the second end wall 102 are insulated and isolated by the fourth insulating member 44. Since the side wall 103 and the second end wall 102 are integrally formed, the negative tab 23 is electrically connected to the second end wall 102.

In other embodiments, the positive tab 22 may be directly connected to the positive electrode terminal 31, without providing the first current collecting member 51 for adapting connection. The negative tab 23 may be directly connected to the housing body 11, without providing the second current collecting member 52 for adapting connection.

When the second end wall 102 and the side wall 103 are integrally formed and serve as the housing body 11, and the first end wall 101 serves as the end cover 12, a maximum thickness of the first end wall 101 is a₁, and a maximum thickness of the second end wall 102 is a₂, satisfying: a₁≥a₂ and a₁≥b.

When 0.001 m³≤π*R₁²*H₁≤0.015 m³ and (R₂²*H₂)/(R₁²*H₁)≥85%, the volume of the battery cell 10 is larger, and the volume of the electrode assembly 2 is also larger. Under the same chemical material system, a larger volume of the electrode assembly 2 results in larger gas generation amount during cycling of the battery cell 10 and a larger internal gas pressure of the battery cell 10.

To reduce the risk of connection failure between the end cover 12 and the housing body 11 caused by increased internal gas pressure, in these embodiments, the end cover 12 is designed to have a large thickness, making a maximum thickness of the end cover 12 greater than or equal to a maximum thickness of the second end wall 102 and greater than or equal to a thickness of the side wall 103 (that is, a₁≥a₂ and a₁≥b), thereby allowing a wider or thicker weld seam to be formed between the end cover 12 and the housing body 11 during welding of the end cover 12 and the housing body 11. This enhances the welding strength and reduces the risk of tearing of the weld seam. During crimping of the end cover 12 and the housing body 11, the strength and rigidity of a crimped region can be enhanced, and the reliability of the crimping connection is improved. Additionally, to form a wider or thicker weld seam or a crimped region with larger strength and rigidity, increasing the thickness of the end cover 12 can reduce material usage and reduce costs as compared to increasing the thickness of the housing body 11. Whereas, increasing the thickness of the housing body 11 means at least increasing the thickness of the side wall 103 connected to the end cover 12, significantly increasing material usage and costs.

When the second end wall 102 and the side wall 103 are integrally formed and serve as the housing body 11, and the first end wall 101 serves as the end cover 12, in some embodiments of this application, 1 mm≤a₁≤2 mm, 0.5 mm≤a₂≤1.5 mm, and 0.2 mm≤b≤0.8 mm.

a₁ may be any value between 1 mm and 2 mm, for example, 1.0 mm, 1.1 mm, 1.2 mm, 1.3 mm, 1.4 mm, 1.5 mm, 1.6 mm, 1.7 mm, 1.8 mm, 1.9 mm, 2.0 mm, or the like.

When a₁<1.0 mm, the thickness of the first end wall 101 is too small, and since the thicknesses of the second end wall 102 and the side wall 103 are smaller than or equal to that of the first end wall 101, it is difficult to ensure the structural strength of the housing 1, and the battery cell 10 is prone to deformation. When a₁>2.0 mm, the thickness of the first end wall 101 is too large, which is not conducive to increasing the volumetric energy density of the battery cell 10 and increases the costs. In these embodiments, setting a₁ to 1 mm to 2 mm can ensure the structural strength of the housing 1 while ensuring the volumetric energy density of the battery cell 10.

a₂ may be any value between 0.5 mm and 1.5 mm, for example, 0.5 mm, 0.6 mm, 0.7 mm, 0.8 mm, 0.9 mm, 1.0 mm, 1.1 mm, 1.2 mm, 1.3 mm, 1.4 mm, 1.5 mm, or the like.

When the battery cell 10 is used with the second end wall 102 facing downward, particles (such as carbon powder and metal shavings) inside the battery cell 10 deposit on the second end wall 102 due to gravity, causing corrosion of the second end wall 102. When a₂<0.5 mm, the thickness of the second end wall 102 is too small, and after long-term corrosion of the second end wall 102 by the particles depositing thereon, the remaining thickness is even smaller, making it difficult for the second end wall 102 to resist the impact of the electrode assembly 2 when the electrode assembly 2 moves within the housing 1, and rupture is easily caused. When a₂>1.5 mm, the thickness of the second end wall 102 is too large, which is not conducive to increasing the volumetric energy density of the battery cell 10 and increases the costs. In these embodiments, setting a₂ to 0.5 mm to 1.5 mm can ensure the ability of the second end wall 102 to resist impact while ensuring the volumetric energy density of the battery cell 10.

b may be any value between 0.2 mm and 0.8 mm, for example, 0.2 mm, 0.3 mm, 0.4 mm, 0.5 mm, 0.6 mm, 0.7 mm, 0.8 mm, or the like.

When b<0.2 mm, the thickness of the side wall 103 is too small, making it difficult to ensure the structural strength of the housing 1 in the height direction X, and the battery cell 10 is prone to deformation when subjected to an external impact in the height direction X. When b₁>0.8 mm, the thickness of the side wall 103 is too large, and the structural strength and rigidity are also too large, making it difficult to absorb swelling of the electrode assembly 2, leading to stress concentration inside the electrode assembly 2, causing a "lithium precipitation" phenomenon, and resulting in cycle life degradation. In these embodiments, setting b to 0.2 mm to 0.8 mm ensures that the structural strength and rigidity of the side wall 103 are moderate, not only allowing swelling of the electrode assembly 2 but also preventing deformation caused by the external impact in the height direction X.

Reference is made to FIG. 6 and FIG. 7. In some embodiments of this application, the housing 1 includes a housing body 11 and two end covers 12, where the housing body 11 has two openings oppositely disposed along the height direction X, and the two end covers 12 respectively cover the corresponding openings. The end covers 12 are connected to the housing body 11 through welding or crimping. The side wall 103 serves as the housing body 11, and the first end wall 101 and the second end wall 102 serve as the two end covers 12, respectively. The battery cell 10 further includes a positive electrode terminal 31 and a negative electrode terminal 32, where the positive electrode terminal 31 is insulatively disposed on the first end wall 101, the negative electrode terminal 32 is disposed on the second end wall 102, a positive tab 22 of the electrode assembly 2 is electrically connected to the positive electrode terminal 31, and a negative tab 23 of the electrode assembly 2 is electrically connected to the negative electrode terminal 32.

In the embodiments shown in FIG. 6 and FIG. 7, the battery cell further includes a first current collecting member 51 and a second current collecting member 52, where the positive tab 22 is electrically connected to the positive electrode terminal 31 via the first current collecting member 51, and the negative tab 23 is electrically connected to the negative electrode terminal 32 via the second current collecting member 52.

When the side wall 103 serves as the housing body 11, and the first end wall 101 and the second end wall 102 serve as the end covers 12, respectively, a maximum thickness of the first end wall 101 is a₁, and a maximum thickness of the second end wall 102 is a₂, satisfying: a₁=a₂ and a₁≥b.

In these embodiments, setting the thicknesses of the first end wall 101 and the second end wall 102 to be equal (that is, a₁=a₂) allows the two end covers 12 required for the battery cell 10 to be produced using a same set of mold, reducing the number of molds and reducing production costs.

For a battery cell 10 with two end covers 12, to improve the installation reliability of the electrode terminal, in these embodiments, the end covers 12 are designed to have a large thickness, making the thickness of the end covers 12 greater than the thickness of the housing body 11 (that is, a₁≥b and a₂≥b), thereby enhancing the structural strength of the end covers 12 and improving the installation reliability of the electrode terminal.

When the side wall 103 serves as the housing body 11, and the first end wall 101 and the second end wall 102 serve as the end covers 12, respectively, in some embodiments of this application, 1 mm≤a₁≤2 mm, and 0.2 mm≤b≤1 mm.

a₁ may be any value between 1 mm and 2 mm, for example, 1.0 mm, 1.1 mm, 1.2 mm, 1.3 mm, 1.4 mm, 1.5 mm, 1.6 mm, 1.7 mm, 1.8 mm, 1.9 mm, 2.0 mm, or the like.

When a₁<1.0 mm, the thicknesses of the first end wall 101 and the second end wall 102 are too small, and since the thickness of the side wall 103 is smaller than or equal to that of the first end wall 101, it is difficult to ensure the structural strength of the housing 1, and the battery cell 10 is prone to deformation. When a₁>2.0 mm, the thicknesses of the first end wall 101 and the second end wall 102 are too large, which is not conducive to increasing the volumetric energy density of the battery cell 10 and increases the costs. In these embodiments, setting a₁ to 1 mm to 2 mm can ensure the structural strength of the housing 1 while ensuring the volumetric energy density of the battery cell 10.

b may be any value between 0.2 mm and 1 mm, for example, 0.2 mm, 0.3 mm, 0.4 mm, 0.5 mm, 0.6 mm, 0.7 mm, 0.8 mm, 0.9 mm, 1 mm, or the like.

When b<0.2 mm, the thickness of the side wall 103 is too small, making it difficult to ensure the structural strength of the housing 1 in the height direction X, and the battery cell 10 is prone to deformation. When b₁>1 mm, the thickness of the side wall 103 is too large, and the structural strength and rigidity are also too large, making it difficult to absorb swelling of the electrode assembly 2, leading to stress concentration inside the electrode assembly 2, causing a "lithium precipitation" phenomenon, and resulting in cycle life degradation. In these embodiments, setting b to 0.2 mm to 1 mm ensures that the structural strength and rigidity of the side wall 103 are moderate, not only allowing swelling of the electrode assembly 2 but also preventing deformation caused by the external impact in the height direction X.

In some embodiments of this application, R₁ and H₁ satisfy: 0.3≤R₁/H₁≤4.

When R₁/H₁ is less than 0.3, the housing 1 is an elongated structure with insufficient overall rigidity, making it prone to deformation. When R₁/H₁ is greater than 4, a diameter of the housing 1 is far larger than a height of the housing 1, so that the housing 1 is a flat structure with too large overall rigidity and structural strength, making it difficult to absorb swelling of the electrode assembly 2, leading to stress concentration inside the electrode assembly 2, causing a "lithium precipitation" phenomenon, and resulting in cycle life degradation. Setting the ratio of R₁ to H₁ between 0.3 and 4 ensures that the height and diameter of the housing 1 are relatively uniform, not only ensuring the overall rigidity and strength of the battery cell but also allowing a certain degree of swelling of the electrode assembly 2.

R₁/H₁ may be any value between 0.3 and 4, for example, 0.3, 0.4, 0.5, 0.6, 0.7, 0.8, 0.9, 1, 2, 3, 4, or the like.

In some embodiments of this application, 100 mm≤R₁≤400 mm.

When R₁<100 mm, to satisfy (R₁-b)/R₁≥99%, it is necessary to set b to a very small value. However, when the value of b is too small, the side wall 103 is easily ruptured by the squeezing of the electrode assembly 2.

When R₁>400 mm, the diameter of the housing 1 is too large, and correspondingly, a diameter of the electrode assembly 2 is also too large, resulting in a larger number of winding turns of the electrode assembly 2, which may lead to an excessively long heat dissipation path for the electrode plate at an inner layer of the electrode assembly 2, preventing heat in the electrode plate at the inner layer from being dissipated outward in time, causing an excessively high temperature in the electrode plate at the inner layer, and thus easily triggering thermal runaway.

In these embodiments, setting R₁ between 40 mm and 150 mm not only can allow an increase in the dimension proportion of the internal space of the housing 1 in the radial direction of the battery cell 10 and increase the volumetric energy density of the battery cell 10, but also can ensure timely heat dissipation of the electrode plate at the inner layer of the electrode assembly 2.

In some embodiments of this application, 100 mm≤H₁≤400 mm.

When H₁<100 mm, to satisfy (H₁-a)/H₁≥96%, it is necessary to set a to a very small value. However, when the value of c is too small, the structural strengths of the first end wall 101 and the second end wall 102 are too small, making it difficult for the first end wall 101 and the second end wall 102 to resist the impact of the electrode assembly 2 when the electrode assembly 2 moves within the housing 1.

When H₁>400 mm, the heights of the battery cell 10 and the electrode assembly 2 are too large, and an excessively tall electrode assembly 2 makes it difficult for the electrolyte to reach the top of the electrode assembly 2, preventing the top of the electrode assembly 2 from being fully infiltrated by the electrolyte and rendering it unable to function, thus reducing the energy density of the battery cell 10.

In these embodiments, setting H₁ between 100 mm and 400 mm not only can allow an increase in the dimension proportion of the internal space of the housing 1 in the height direction of the battery cell 10 and increase the volumetric energy density of the battery cell 10, but also can ensure that the top of the electrode assembly 2 can be fully infiltrated by the electrolyte.

In some embodiments of this application, the battery cell 10 is a lithium-ion battery. A positive electrode active material of the battery cell 10 includes a lithium-containing phosphate, and a capacity of the battery cell 10 is C, satisfying: C≥350 Ah, and C/[π*(R₁-b)²*(H₁-a)]≥120 Ah/L. In a specific example, the lithium-containing phosphate may include, but is not limited to, one or more of lithium iron phosphate, lithium manganese phosphate, lithium cobalt phosphate, and lithium nickel phosphate.

In some embodiments of this application, a positive electrode active material of the battery cell 10 includes a lithium transition metal oxide, and a capacity of the battery cell 10 is C, satisfying: C≥650 Ah, and C/[π*(R₁-b)²*(H₁-a)]≥193 Ah/L. In a specific example, the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, and lithium nickel cobalt aluminum oxide.

In some embodiments of this application, the battery cell 10 is a sodium-ion battery, and a capacity of the battery cell 10 is C, satisfying: C≥260 Ah, and C/[π*(R₁-b)²*(H₁-a)]≥88 Ah/L.

An embodiment of this application provides a battery 100 including a battery box 20 and the battery cell 10 provided in any of the above embodiments, where the battery cell 10 is accommodated within the battery box 20.

An embodiment of this application provides an electric apparatus including the battery provided in any of the above embodiments.

An embodiment of this application provides an energy storage apparatus 2000 including an energy storage box 400 and the battery cell 10 provided in any of the above embodiments, where the energy storage box 400 includes a battery compartment 401, and the battery cell 10 is accommodated within the battery compartment 401.

In some embodiments of this application, a sum of volumes of the plurality of battery cells 10 is V₁, and a volume of the battery compartment 401 is V₂, satisfying: 0.5≤V₁/V₂≤0.95.

V₁ is a sum of volumes of all battery cells 10 in the battery compartment, and if the volumes of all battery cells 10 in the battery compartment 401 are equal, V₁ is a product of a volume of each battery cell 10 and the number of the battery cells 10, and V₂ is a volume of a three-dimensional space defined by an inner contour of the battery compartment 401. In the energy storage apparatus 2000, V₁/V₂ may be defined as a space utilization rate.

In this embodiment, the ratio of the sum of volumes of the battery cells 10 to the volume of the battery compartment is defined, to be specific, V₁/V₂≥0.5, so that the space utilization rate of the energy storage apparatus 2000 can be increased, allowing more battery cells 10 to be arranged within the battery compartment 401 of the energy storage box 400. To be specific, more energy-providing structures are arranged per unit space, increasing the energy density, thereby increasing the capacity without expanding occupied space.

In some embodiments of this application, the ratio of the sum of volumes of the plurality of battery cells 10 to the volume of the battery compartment 401 satisfies: V₁/V₂≥0.55.

In some embodiments of this application, the ratio of the sum of volumes of the plurality of battery cells 10 to the volume of the battery compartment 401 satisfies: V₁/V₂≥0.65.

In some embodiments of this application, the ratio of the sum of volumes of the plurality of battery cells 10 to the volume of the battery compartment 401 satisfies: V₁/V₂≥0.75.

Persons skilled in the art can understand that, since other components including a liquid cooling system, a control system, wiring harnesses, and the like used in conjunction with the battery cells 10 occupy the internal space of the battery compartment, a peak value of V₁/V₂ is typically 95%, that is, V₁/V₂≤95%.

It should be noted that, when there is no conflict, the embodiments and the features in the embodiments of this application may be combined with each other.

The above embodiments are only used to illustrate the technical solutions of this application and are not intended to limit this application. For persons skilled in the art, various modifications and changes can be made to this application. Any modifications, equivalent replacements, and improvements made without departing from the spirit and principle of this application shall fall within the protection scope of this application.

## Claims

1. A battery cell, **characterized by** comprising a housing and an electrode assembly, wherein the electrode assembly is accommodated within the housing, the housing is cylindrical, a height of the housing is H₁, and a radius of the housing is R₁; and
the housing comprises a first end wall, a second end wall, and a side wall; the first end wall and the second end wall are oppositely disposed along a height direction of the housing; the side wall connects the first end wall and the second end wall; and a sum of thicknesses of the first end wall and the second end wall is a, and a thickness of the side wall is b, satisfying: (R₁-b)²*(H₁-a)/(R₁²*H₁)≥96%.

2. The battery cell according to claim 1, **characterized in that** (R₁-b)/R₁≥99%, 100 mm≤R₁≤400 mm, and 0.2 mm≤b≤2 mm.

3. The battery cell according to claim 1 or 2, **characterized in that** (H₁-a)/H₁≥96%, 100 mm≤H₁≤400 mm, and 2 mm≤a≤7 mm.

4. The battery cell according to any one of claims 1 to 3, **characterized in that** the housing comprises a housing body and two end covers, wherein the housing body has two oppositely disposed openings, and the two end covers respectively cover the corresponding openings; and
the housing body serves as the side wall, and the two end covers serve as the first end wall and the second end wall, respectively.

5. The battery cell according to claim 4, **characterized in that** the battery cell further comprises a first insulating member and a second insulating member, wherein the first insulating member is disposed between the first end wall and the electrode assembly and abuts against the first end wall, and the second insulating member is disposed between the second end wall and the electrode assembly and abuts against the second end wall; and
a maximum dimension of the first insulating member in the height direction is d₁, and a maximum dimension of the second insulating member in the height direction is d₂, satisfying: (H₁-a-d₁-d₂)/H₁≥90%, wherein 2 mm≤d₁≤6 mm, and 2 mm≤d₂≤6 mm.

6. The battery cell according to any one of claims 1 to 3, **characterized in that** the housing comprises a housing body and an end cover, wherein the housing body has an opening, and the end cover covers the opening; and
the housing body comprises the second end wall and the side wall that are integrally formed, and the end cover serves as the first end wall.

7. The battery cell according to claim 6, **characterized in that** the battery cell further comprises a third insulating member, wherein the third insulating member is disposed between the first end wall and the electrode assembly and abuts against the first end wall; or the third insulating member is disposed between the second end wall and the electrode assembly and abuts against the second end wall; and
a maximum dimension of the third insulating member in the height direction is d₃, satisfying: (H₁-a-d₃)/H₁≥92%, wherein 2 mm≤d₃≤6 mm.

8. The battery cell according to any one of claims 1 to 7, **characterized in that** 0.001 m³≤π*R₁²*H₁≤0.015 m³.

9. The battery cell according to claim 8, **characterized in that** the electrode assembly is a wound structure, wherein the electrode assembly is cylindrical, a height of the electrode assembly is H₂, and a radius of the electrode assembly is R₂, satisfying: (R₂²*H₂)/(R₁²*H₁)≥85%.

10. The battery cell according to claim 9, **characterized in that** R₂/(R₁-b)≥97.5%, and H₂/(H₁-a)≥92.5%.

11. The battery cell according to claim 9 or 10, **characterized in that** materials of the first end wall, the second end wall, and the side wall all comprise an aluminum alloy, wherein the aluminum alloy comprises components with the following mass percentages: aluminum≥96.7%, 0.05%≤copper≤0.2%, iron≤0.7%, manganese≤1.5%, silicon≤0.6%, zinc≤0.1%, each other individual element component≤0.05%, and total other element components≤0.15%.

12. The battery cell according to claim 9 or 10, **characterized in that** materials of the first end wall, the second end wall, and the side wall all comprise an iron alloy, wherein the iron alloy comprises components with the following mass percentages: iron≥98%, and 0.15%≤carbon≤2%; and the iron alloy further contains manganese, silicon, sulfur, phosphorus, and the like, with each individual element component≤0.05% and total components≤0.2%.

13. The battery cell according to claim 12, **characterized in that** the housing comprises a housing body and an end cover, wherein the housing body has an opening, the end cover covers the opening, and the end cover is connected to the housing body through welding or crimping;
the housing body comprises the second end wall and the side wall that are integrally formed, and the end cover serves as the first end wall; and
the battery cell further comprises a positive electrode terminal, the positive electrode terminal is insulatively disposed on the second end wall, the electrode assembly comprises a positive tab and a negative tab, the positive tab is electrically connected to the positive electrode terminal, and the negative tab is electrically connected to the second end wall.

14. The battery cell according to claim 12, **characterized in that** the housing comprises a housing body and an end cover, wherein the housing body has an opening, the end cover covers the opening, and the end cover is connected to the housing body through welding or crimping;
the housing body comprises the second end wall and the side wall that are integrally formed, and the end cover serves as the first end wall; and
the battery cell further comprises a positive electrode terminal, the positive electrode terminal is insulatively disposed on the first end wall, the electrode assembly comprises a positive tab and a negative tab, the positive tab is electrically connected to the positive electrode terminal, and the negative tab is electrically connected to the first end wall.

15. The battery cell according to claim 13 or 14, **characterized in that** a maximum thickness of the first end wall is a₁, and a maximum thickness of the second end wall is a₂, satisfying: a₁≥a₂ and a₁≥b.

16. The battery cell according to claim 15, **characterized in that** 1 mm≤a₁≤2 mm, 0.5 mm≤a₂≤1.5 mm, and 0.2 mm≤b≤0.8 mm.

17. The battery cell according to claim 11 or 12, **characterized in that** the housing comprises a housing body and two end covers, wherein the housing body has two oppositely disposed openings, and the two end covers respectively cover the corresponding openings;
the housing body serves as the side wall, the two end covers serve as the first end wall and the second end wall, respectively, and the end covers are connected to the housing body through welding or crimping; and
the battery cell further comprises a positive electrode terminal and a negative electrode terminal, the positive electrode terminal is disposed on the first end wall, the negative electrode terminal is disposed on the second end wall, the electrode assembly comprises a positive tab and a negative tab, the positive tab is electrically connected to the positive electrode terminal, and the negative tab is electrically connected to the negative electrode terminal.

18. The battery cell according to claim 17, **characterized in that** a maximum thickness of the first end wall is a₁, and a maximum thickness of the second end wall is a₂, satisfying: a₁=a₂ and a₁≥b.

19. The battery cell according to claim 18, **characterized in that** 1 mm≤a₁≤2 mm, and 0.2 mm≤b≤1 mm.

20. The battery cell according to any one of claims 8 to 19, **characterized in that** 0.3≤R₁/H₁≤4, 100 mm≤R₁≤400 mm, and 100 mm≤H₁≤400 mm.

21. The battery cell according to any one of claims 1 to 20, **characterized in that** a positive electrode material of the battery cell comprises a lithium-containing phosphate, and a capacity of the battery cell is C, satisfying: C≥350 Ah, and C/[π*(R₁-b)²*(H₁-a)]≥120 Ah/L.

22. The battery cell according to any one of claims 1 to 20, **characterized in that** a positive electrode material of the battery cell comprises a lithium transition metal oxide, and a capacity of the battery cell is C, satisfying: C≥650Ah, and C/[π*(R₁-b)²*(H₁-a)]≥193 Ah/L.

23. The battery cell according to any one of claims 1 to 20, **characterized in that** the battery cell is a sodium-ion battery, and a capacity of the battery cell is C, satisfying: C≥260 Ah, and C/[π*(R₁-b)²*(H₁-a)]≥88 Ah/L.

24. A battery, **characterized by** comprising the battery cell according to any one of claims 1 to 23.

25. An electric apparatus, **characterized by** comprising the battery according to claim 24, wherein the battery is configured to provide electrical energy to the electric apparatus.

26. An energy storage apparatus, **characterized by** comprising:
an energy storage box, wherein the energy storage box has a battery compartment; and
a plurality of battery cells according to any one of claims 1 to 23, wherein the plurality of battery cells are disposed within the battery compartment.

27. The energy storage apparatus according to claim 26, **characterized in that** a sum of volumes of the housings of the plurality of battery cells is V₁, and a volume of the battery compartment is V₂, satisfying: 0.5≤V₁/V₂≤0.95.
